# EUROPEAN PATENT APPLICATION

(11) **EP 1 176 822 A2**
(43) Date of publication of application: **30.01.2002**
(21) Application number: 01104559.8
(22) Date of filing: 05.03.2001
(51) Int. Cl.: H04N 5/775

(54) **Signal output apparatus and signal output method**

(30) Priority: 25.07.2000 JP 2000224277
(71) Applicant: KABUSHIKI KAISHA TOSHIBA, Kawasaki-shi, Kanagawa-ken 210-8572 (JP)
(72) Inventor: Matsushita, Ken, 1-1 Shibaura 1-chome Minato-ku Tokyo 105 (JP); Konda, Kazunobu, 1-1 Shibaura 1-chome Minato-ku Tokyo 105 (JP); Tajima, Teruo, 1-1 Shibaura 1-chome Minato-ku Tokyo 105 (JP)
(74) Representative: HOFFMANN - EITLE

(57) **Abstract**

A signal output apparatus automatically determines which of a plurality of signals output from an apparatus is effective, and outputs the effective signal. For this purpose, the signal output apparatus comprises an output signal inquiring section (108) configured to inquire an apparatus (20) which outputs a plurality of kinds of signals (digital/analog) about a kind of a signal output therefrom, an effective input signal determining section (120) configured to determine which of a plurality of signals (digital/analog) output from the apparatus is an effective input signal based on a result of inquiry by the output signal inquiring section, and a data outputting section (122) configured to output data corresponding to the effective input signal based on a result of determination by the effective input signal determining section.

## Description

The present invention relates to a signal output apparatus and a signal output method applied to an apparatus that deals with a plurality of kinds of signals. More particularly, the present invention relates to a signal output apparatus and a signal output method in an apparatus on a network utilizing an IEEE 1394 interface.

The IEEE 1394 interface has engaged the public attention as a digital interface for constituting a network in a home. The IEEE 1394 is a high-speed serial bus interface, which has an asynchronous transfer mode and an isochronous transfer mode. In the isochronous transfer mode, a constant transfer rate is ensured. Therefore, the IEEE 1394 serial bus is suitable for transfer of a digital video signal or the like, which requires real-time processes.

The conventional art of the network system having the IEEE 1394 interface includes, for example, a media-contents management AV system disclosed in Jpn. Pat. Appln. KOKAI Publication No. 9-120666.

An analog video signal line is also widely used to transfer video signals in real time. Therefore, digital equipment having the IEEE 1394 interface, for example, a digital video recorder, generally enables not only IEEE 1394 digital output but also analog video output.

It is assumed that a set-top box (STB) including the IEEE 1394 interface and a digital video recorder (DVHS or the like) are connected by both an IEEE 1394 serial bus cable and an analog video cable.

In this case, when the digital video recorder (output device) playing back material recorded in a videotape reproduces a digital record program, a reproduction output signal on the digital interface side is effective. When the output device reproduces an analog record program, a reproduction output signal on the analog interface side is effective. For this reason, the STB, which receives both digital and analog reproduction outputs, is required to suitably select an effective signal and output the selected effective signal as display data on a display device (e.g., a digital TV).

In the structure described above, the STB may generally output a signal input on the digital interface side as display data, and if a signal input on the analog interface side is effective, the STB may display on the screen of the display device a message, such as "Under analog reproduction. Switch to an analog input". With this message, the user is prompted to perform an input switching operation, if an analog signal is effective.

The reason for performing the above operation is that if the STB has a plurality of analog video input terminals, it is difficult to automatically switch from a digital input to a specific analog input, since only the user who connected the cables knows which terminal receives a desired analog signal.

It is assumed that an apparatus (DVHS or the like) can record/reproduce data in/from both an analog source and digital source and output both analog and digital signals, that outputs from the apparatus are input to, for example, the STB, and that any one of the inputs is output from the STB as display data. In this case, when input is switched from the digital side to the analog side, if there is a plurality of analog input terminals, it is difficult to automatically specify to what input terminal a desired analog signal is input. Therefore, there is no other choice but to make the user to manually switch the input signals.

The present invention was made in consideration of the above situation. A first object of the present invention is to provide a signal output apparatus for automatically determining which of a plurality of signals output from an apparatus is effective and outputting the effective signal.

A second object of the present invention is to provide a signal output method for automatically determining which of a plurality of signals output from an apparatus is effective and outputting the effective signal.

To achieve the first object, a signal processing apparatus of the present invention comprises: an output signal inquiring section configured to inquire an apparatus which outputs a plurality of kinds of signals about a kind of a signal output therefrom; an effective input signal determining section configured to determine which of a plurality of signals output from the apparatus is an effective input signal based on a result of inquiry by the output signal inquiring section; and a data outputting section configured to output data corresponding to the effective input signal based on a result of determination by the effective input signal determining section.

The signal processing apparatus may further comprise an input setting storing section configured to set a specified input in advance and store input information of the set specified input. In this case, the effective input signal determining section may be configured to determine which of the plurality of signals is effective based on the input information stored in the input setting storing section; and the data outputting section may be configured to output data corresponding to the input information stored in the input setting storing section.

To achieve the second object, a signal processing method of the present invention comprises the steps of: inquiring an apparatus which outputs a plurality of kinds of signals (digital/analog) about a kind of the signal output therefrom; determining which of a plurality of signals (digital/analog) output from the apparatus is an effective input signal based on a result of the inquiring step; and outputting data corresponding to the effective input signal based on a result of the determining step.

The signal processing method may further comprise the step of setting a specified input in advance and storing input information of the set specified input. In this case, the determining step is configured to determine which of the plurality of signals is effective based on the input information stored in the setting and storing step; and the outputting step is configured to output an input signal corresponding to the input information stored in the setting and storing step.

Further, a signal processing method of the present invention comprises the steps of: setting a specified analog input in advance and storing input information of the set specified analog input; inquiring an apparatus which outputs a plurality of kinds of signals, which can be digital and analog, about a kind of the signal output from the apparatus; determining which of the plurality of signals (digital/analog) output from the apparatus is an effective input signal based on a result of the inquiring step; and outputting data corresponding to the effective input signal based on a result of the determining step. In this method, even if the effective input signal is a digital signal (a DV signal or the like), if an apparatus which receives the data output by the outputting step is not adapted for the digital signal (the DV signal or the like) but adapted for an analog signal, a signal corresponding to the analog input set in advance in the setting and storing step is output by the outputting step.

If the effective input signal is a digital signal (an MPEG2 transport stream or the like) and the apparatus which receives the data output by the outputting step is adapted for the digital signal (the MPEG2 transport stream or the like), data corresponding to the digital signal determined to be effective by the determining step is output by the outputting step.

According to the apparatus or method as described above, it is possible to automatically determine which of a plurality of signals output from the apparatus is effective and also to output the automatically selected signal as display data. Thus, the complexity (troublesomeness) of an input signal switching operation by the user can be decreased and the operability for the user can be improved.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram for explaining an outline of a signal output apparatus according to an embodiment of the present invention;
FIG. 2 is a block diagram for explaining functions of an STB used in the apparatus shown in FIG. 1 with reference to an internal structure of the STB;
FIG. 3 is a flowchart for explaining an example of a process for determining an effective signal in the system of the embodiment; and
FIG. 4 is a flowchart for explaining another example of a process for determining an effective signal in the system of the embodiment.

A signal output apparatus and a signal output method according to an embodiment of the present invention will be described with reference to the accompanying drawings.

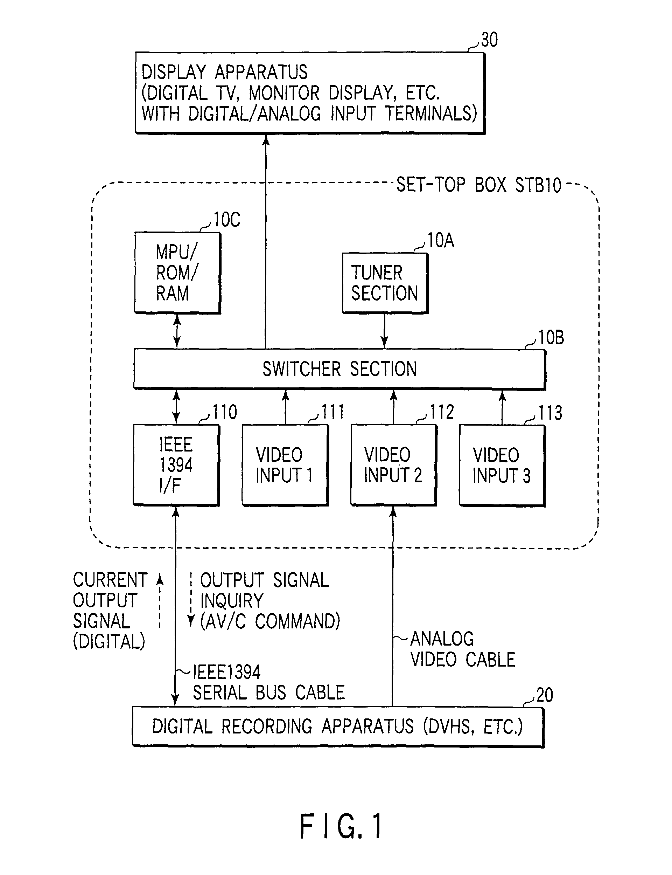

FIG. 1 is a block diagram for explaining an outline of a signal output apparatus according to an embodiment of the present invention. In this embodiment, a set-top box (STB) 10 comprises a TV tuner section 10A ready for digital and analog broadcasts, a switcher section 10B, a control-oriented microcomputer (MPU/ROM/RAM) 10C, etc.

The STB 10 incorporates an IEEE 1394 interface (IEEE 1394 I/F) 110 in which processing functions of the IEEE 1394 are integrated, and the microcomputer 10C, which includes the ROM storing a control program (firmware) for performing various apparatus controls. The firmware can be executed by the MPU in the microcomputer 10C.

The IEEE 1394 I/F 110 in the STB 10 is networked to at least one IEEE 1394-compliant apparatus (another apparatus equipped with an IEEE 1394 I/F) through an IEEE 1394 serial bus. In the drawing, a digital recording apparatus (a DVHS, a digital video (DV), a DVD-RAM recorder, a DVD streamer or the like) 20 is illustrated as an example of the IEEE 1394-compliant apparatus networked to the STB 10. The digital recording apparatus 20 can record and reproduce stream data (an MPEG 2 transport stream) of a digital broadcast without converting it. The digital recording apparatus 20 is constructed to not only digital-output a recorded TV program as an MPEG 2 transport stream but also convert the recorded stream by means of DAC into an analog video signal and output the converted analog signal.

The switcher section 10B is connected to the IEEE 1394 I/F 110 serving as an interface for establishing network connection with another apparatus, and analog video input terminals 111 to 113. The switcher section 10B is constructed to select either a digital signal from the IEEE 1394 I/F 110 or an analog signal from the analog video input terminal 111, 112 or 113 by an operation of the user or under the control of the MPU, and output (supply) the selected signal to an external display apparatus (a digital TV, a monitor display, etc. with digital and analog input terminals) 30.

The display apparatus 30 has at least one of, for example, D1 to D5 terminals, as a digital video input terminal. It also has a composite video terminal and an S terminal as analog video terminals. A digital output from the switcher section 10B is supplied to the digital video input terminal of the display apparatus 30. An analog output from the switcher section 10B is supplied to the analog video input terminal of the display apparatus 30.

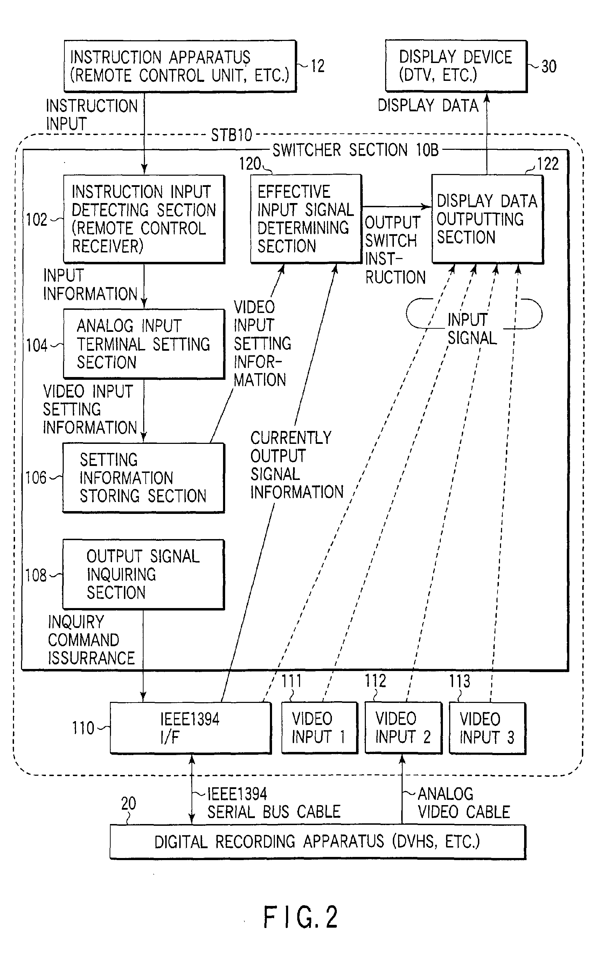

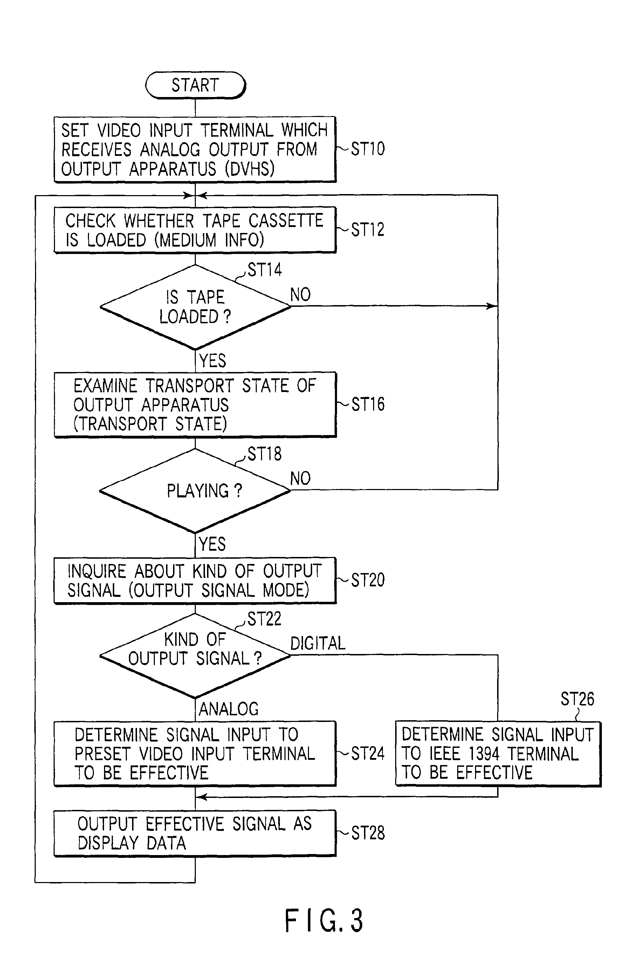

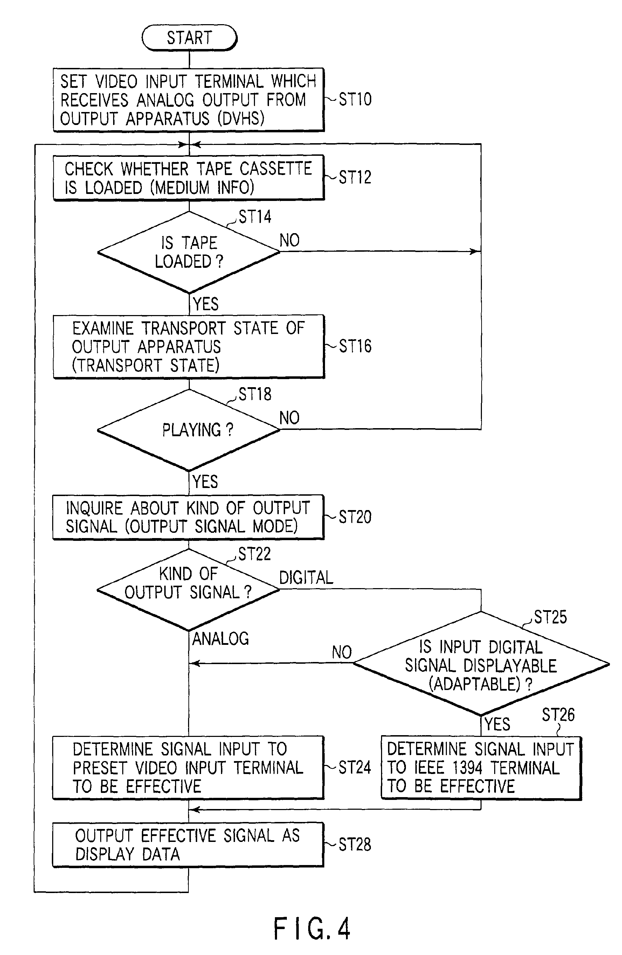

The ROM in the control-oriented microcomputer 10C stores programs corresponding to the processes shown in FIG. 3 or 4 (to be described later) as firmware (adapted to the functional blocks shown in FIG. 2). The MPU in the microcomputer 10C executes the firmware in the ROM using the internal RAM as a work memory, thereby controlling the switching operation of the switcher section 10B.

In the embodiment shown in FIG. 1, the digital recording apparatus (a DVHS, a digital video (DV), a DVD-RAM recorder, a DVD streamer or the like) 20 is used as an example of another apparatus connected to the STB 10. The recording apparatus 20 incorporates an IEEE 1394 I/F (not shown), which is connected to the IEEE 1394 I/F of the STB 10 through an IEEE 1394 serial bus cable. An analog video output from the recording apparatus 20 is connected to, for example, the video input terminal 112 of the STB 10 through an analog video cable.

An IEEE 1394-compliant digital apparatus (a DVD streamer, a video editor, a digital TV or the like), which is not shown, can also be networked to the IEEE 1394 I/F 110 of the STB 10. Further, another analog video apparatus (a video output of an analog VCR, an analog video output of a DVD video player, etc.), which is not shown, can be connected to the video input terminals 111 and 113 of the STB 10.

The user's operation with respect to the STB 10 (turning on/off of the power source, designating or channel-selection switching of a reception channel of the tuner section 10A, switching of internal connection of the apparatus by the switcher section 10B or switching of an external input terminal) is executed by an operation panel (not shown) of the main body of the STB 10 or an instruction apparatus such as a remote control unit (12 in FIG. 2).

Assuming that the digital recording apparatus 20 is a digital video tape recorder (DVHS), a tape on which both digital and analog recording programs are recorded is replayed as follows.

First, the user sets an analog video input terminal 112 (video input 2), to which the DVHS 20 is analog-connected, by means of a user interface of the STB 10.

After the replay of the tape is started, the STB 10 periodically issues an output signal inquiry command (one of AV/C commands), which can be transmitted through the IEEE 1394 serial bus, in order to monitor whether an analog or digital program is currently replayed. Based on the monitoring, the STB 10 determines which of the IEEE 1394 I/F or the video input 2 receives an effective signal (a signal to be transmitted to the display apparatus). In accordance with the determination result, the STB 10 can always output an effective signal to the display apparatus (digital TV or the like) 30 as display data.

The IEEE 1394 I/F 110 allows the networked apparatus to confirm what kind of machine is connected to the other end of the line.

For example, the apparatus (DVHS) 20 can obtain the following information on the other apparatus (STB) 10 through the IEEE 1394 serial bus:
* The STB 10 has an ID: XXX ··· XXX, a vendor name: T Corporation, and a model name: ABC; and
* It has a tuner-sub unit.

Likewise, the apparatus (STB) 10 can obtain the following information on the other apparatus (DVHS) 20:
* The apparatus (DVHS) 20 has an ID: YYY ··· YYY, the vendor name: V Corporation, and a model name: XYZ; and
* It has a tuner sub-unit and a tape recorder/player sub-unit.

The STB 10, which has obtained the above information, can exchange data with the DVHS 20 using a predetermined channel number by means of isochronous transfer (or asynchronous transfer).

In the IEEE 1394 I/F, the following items are determined after the interface is reset before it is ready for normal packet transfer:
(1) Nodes connected to the IEEE 1394 bus (the parentage of the nodes is determined);
(2) A root node (in this case, the STB 10 is a root node);
(3) Self-identification (in this case, the node IDs of the STB and the DVHS are determined);
(4) An isochronous resource manager;
(5) A cycle master; and
(6) A bus manager.

When the nodes (of the STB and the DVHS) connected to the IEEE 1394 bus are determined, normal packet transfer (isochronous transfer or asynchronous transfer) is started.

The isochronous transfer is a system for transferring and receiving data in a constant cycle (125 µs). According to the format of a packet subjected to isochronous transfer, a channel number is given but an ID of a forwarding address is not. The asynchronous transfer is a system for transmitting and receiving data at any given time. An AV/C command can be transferred by utilizing the asynchronous transfer. An AV data body (an MPEG 2 transport stream, etc.) can be transferred by utilizing the isochronous transfer.

The IEEE 1394 communication controllers (IEEE 1394 I/Fs 110) included in the respective apparatuses are provided with hardware and software necessary for the processes (determination of the above items, etc.) of the IEEE 1394 I/Fs.

FIG. 2 is a block diagram for explaining functions of an STB used in the apparatus shown in FIG. 1 with reference to an internal structure of the STB. Referring to the drawing, a digital output from the digital recording apparatus (a DVHS, a digital video (DV), a DVD-RAM recorder, a DVD streamer or the like) 20 is connected to the IEEE 1394 I/F 110 through the IEEE 1394 serial bus cable. An analog output from the apparatus 20 is connected to the video input terminal 112 of the video input 2 through the analog video cable.

The user determines to use, for example, the video input 2 for analog signal input by operating the instruction apparatus (remote control unit or the like) 12, while observing a menu (not shown) displayed on the screen of the display apparatus (digital TV or the like) 30. This determining operation is executed by an instruction input detecting section (remote control receiver) 102 and an analog input terminal setting section 104. The setting information of the determined video input 2 is stored in a setting information storing section 106 provided in the work RAM (or an EEPROM not shown) of the microcomputer 10C shown in FIG. 1.

An output signal inquiring section 108 transmits an AV/C command for inquiring an output signal mode to the digital recording apparatus 20 via the IEEE 1394 I/F 110. Based on a response to the inquiry command from the apparatus 20, the IEEE 1394 I/F 110 obtains currently output signal information from the apparatus 20 (whether the signal is digital or analog). The currently output signal information is supplied to an effective input signal determining section 120 along with the video input setting information stored in the setting information storing section 106.

The effective input signal determining section 120 determines whether an analog signal or a digital signal is an effective signal based on the currently output signal information supplied from the IEEE 1394 I/F.

When the effective input signal determining section 120 determines that a digital signal is an effective signal, the digital signal input to the IEEE 1394 I/F 110 is determined to be an effective signal, and an output switch instruction for outputting the digital signal to the display apparatus 30 is supplied to a display data outputting section 122. Then, the display data outputting section 122 supplies the digital signal (for example, an MPEG 2 transport stream) from the IEEE 1394 I/F 110 to a digital terminal of the display apparatus (digital TV) 30 as display data.

On the other hand, when the effective input signal determining section 120 determines that an analog signal is an effective signal, the analog video signal input to the video input terminal 112 of the video input 2 is determined to be an effective signal based on the video input setting information stored in the setting information storing section 106. Then, an output switch instruction, for outputting the analog video signal from the video input 2 to an analog terminal of the display apparatus 30, is given to the display data outputting section 122.

FIG. 3 is a flowchart for explaining an example of a process for determining an effective signal in the system of this embodiment. The process illustrated in the flowchart can be executed by the microcomputer 10C shown in FIG. 1.

First, the user sets the video input terminal (the video input 2 in FIGS. 1 and 2) as a terminal for receiving an analog output from the output apparatus (digital recording apparatus such as a DVHS) 20 (step ST10). The setting process corresponds to the function of the analog input terminal setting section 104 shown in FIG. 2.

Then, the output signal inquiring section 108 shown in FIG. 2 issues an inquiry command (AV/C command "MEDIUM INFO") and supplies it to the output apparatus 20 via the IEEE 1394 I/F 110. As a result, it is checked whether the apparatus 20 is loaded with a tape (video cassette) (step ST12).

When the tape is loaded in a tape transport of the apparatus 20 (step ST14, YES), the transport state (a replay, fast-forward, fast-reverse or a pause) is examined (step ST16). This examination can be performed by issuance of an inquiry command (AV/C command "TRANSPORT STATE") by the output signal inquiring section 108 and supply of the command to the output apparatus 20 via the IEEE 1394 I/F 110.

If the transport of the apparatus 20 is performing a reply operation (step ST18, YES), the output signal inquiring section 108 issues an inquiry command (AV/C command "OUTPUT SIGNAL MODE") and supplies it to the output apparatus 20 via the IEEE 1394 I/F 110. As a result, it is determined whether the content recorded on the tape replayed by the apparatus 20 is a digital record or an analog record (step ST20).

In the step ST20, at the same time, a digital signal format (an MPEG transport stream or a digital video bit stream) may be checked by an AV/C command "OUTPUT PLUG SIGNAL FORMAT" for setting and inquiring the signal format of an output plug. Alternatively, in the step ST 20, at the same time, the content of a packet header of the digital stream input to the IEEE 1394 I/F 110 may be checked, so that the signal format can be examined.

If the content of the record replayed by the apparatus 20 is an analog record (or even if a digital record is replayed, if an ADC and a DAC are arranged at the input and the output and a record signal is input and output in analog form), the apparatus 20 does not output a digital signal but outputs an analog signal (step ST22, "ANALOG"). In this case, it is determined that the analog signal in the video input 2 set in the step ST10 is an effective signal (step ST24). The analog signal determined to be effective is output to the display apparatus (digital TV or the like) 30 from the display data outputting section 122 shown in FIG. 2 (step ST28).

On the contrary, if the content of the record replayed by the apparatus 20 is a digital record (if a digital bit stream is recorded and a record signal is input and output in digital form), the apparatus 20 outputs an analog signal and a digital signal (step ST22, "DIGITAL"). In this case, even if an analog signal of the same content is output from the apparatus 20, it is determined that the digital signal input to the IEEE 1394 I/F 110 is an effective signal (step ST26). The digital signal determined to be effective is output to the display apparatus (digital TV or the like) 30 from the display data outputting section 122 (step ST28).

According to the process illustrated in FIG. 3, which of the analog inputs is used as an effective signal is stored in advance (step ST10). Therefore, if it is determined that an analog signal is an effective signal, the analog signal intended by the user can be automatically selected and output.

FIG. 4 is a flowchart for explaining another example of a process for determining an effective signal in the system of the embodiment. Steps ST10 to ST22 and ST 28 illustrated in FIG. 4 are the same as the steps ST10 to ST22 and ST 28 illustrated in FIG. 3. Therefore, in the following, steps ST24 to ST26, which are different from the process shown in FIG. 3, will be described mainly.

In the case where the output apparatus 20 can output digital signals of various formats (a MPEG 2 transport stream, a bit stream of a digital video DV, a bit stream of a DVD streamer, etc.), if the display apparatus (data receiving apparatus) 30 is not adapted for the output digital signal format (step ST25, NO), for example, if the display apparatus 30 has only analog inputs or it is adapted for a MPEG 2 transport stream but not a DV bit stream, then, even if a digital signal (a DV bit stream) is input to the IEEE 1394 I/F 110, the analog signal is determined to be an effective signal (step ST24). In this case, the analog signal at the analog video input terminal (video input 2) set in the step ST10 is output to the display apparatus 30 from the display data outputting section 122 shown in FIG. 2 (step ST28). Alternatively, the digital signal (DV bit stream), which cannot be dealt with by the display apparatus 30, is converted to an analog signal by a DAC (not shown) and the converted analog signal is output to the display apparatus 30 from the display data outputting section 122 (step ST28).

In the case where a digital signal is output from the output apparatus 20, if the display apparatus 30 is adapted for the digital signal (step ST25, YES), it is determined that the digital signal is an effective signal (step ST26). The digital signal determined to be effective is output to the display apparatus (digital TV or the like) 30 from the display data outputting section 122 (step ST28).

In the step ST22, if a digital signal and an analog signal are simultaneously output from the same apparatus (DVHS or the like) 20, the digital signal is given a higher priority by default; therefore, the digital signal is determined to be effective. However, it is possible that the user selects a digital or analog signal from the menu screen (not shown) of the STB 10, so that the selected one is given a higher priority and determined to be effective by default. In a certain case, after a digital stream is D/A converted to an analog signal, OSD data or the like is superposed on this analog signal. In this case, if the digital signal is selected as effective, the OSD data cannot be displayed. Therefore, it is meaningful that the user can select an analog priority mode.

According to the process illustrated in FIG. 4, which of the analog inputs is used as an effective signal is stored in advance (step ST10). Therefore, if it is determined that an analog signal is effective, the analog signal intended by the user can be automatically selected and output. In addition, in the case where a digital signal is determined to be effective, if the receiver side for receiving the digital signal is not adapted for the format of the digital signal, an analog signal corresponding to the digital signal can be automatically output.

The present invention is not limited to the above embodiment, but variations and modifications can be made within the scope of the gist of the invention, when the invention is implemented. Further, variations and modifications may be suitably combined so far as possible. In this case, an advantage can be obtained by the combination.

Further, the above embodiment includes various stages of the invention. Therefore, various inventions can be extracted by a suitable combination of the features disclosed by this application. For example, even if one or more features are deleted from all the features of the embodiment, if the advantage of the present invention is obtained, the structure with the remaining features may be extracted as an invention.

As has been described above, according to the signal output apparatus or the signal output method of the present invention, it is possible to automatically select one of the signals output from the apparatus (20) as an effective signal, and also to output the automatically selected signal as display data. Thus, the complexity (troublesomeness) of an input signal switching operation by the user can be decreased and the operability for the user can be improved.

## Claims

1. A signal processing apparatus **characterized by** comprising:
an effective input signal determining means (120) configured to determine which of a plurality of signals (digital/analog) output from an apparatus (20) is an effective input signal; and
a data outputting means (122) configured to output data corresponding to the effective input signal based on a result of determination by the effective input signal determining means.

2. A signal processing apparatus according to claim 1, **characterized by** further comprising an output signal inquiring means (108) configured to inquire the apparatus (20) of a kind of the signal output from the apparatus (20) which outputs a plurality of kinds of signals (digital/analog), and
**characterized in that** the effective input signal determining means (120) is configured to determine which of the plurality of signals (digital/analog) output from the apparatus (20) is effective based on a result of inquiry.

3. A signal processing apparatus according to claim 2, **characterized by** further comprising:
a memory (104, 106) configured to set a specified input in advance and store input information of the set specified input, and
**characterized in that**:
the effective input signal determining means (120) is configured to determine which of the plurality of signals is effective based on the input information stored in the input setting storing means (104, 106); and
the data outputting means (122) is configured to output an input signal corresponding to the input information stored in the input setting storing means (104, 106).

4. A signal processing apparatus according to any one of claims 1 to 3, **characterized by** further comprising a display apparatus (30) for displaying a content of data output from the data outputting means (122).

5. A signal processing apparatus according to any one of claims 1 to 4, **characterized by** further comprising a tuner (10A) configured to receive a digital TV broadcast; a digital signal terminal (110) for receiving a digital signal from an apparatus (20: DVHS, a DV, a DVD streamer, etc.) which outputs at least one of a digital signal and an analog signal, and an analog signal terminal (112) for receiving an analog signal from the apparatus (20); and a switcher (10B) for selecting one of the digital signal, the analog signal output from the apparatus (20) and a TV broadcast reception signal output from the tuner (10A), and
**characterized in that** the switcher (10B) comprises: an output signal inquiring means (108) configured to inquire the apparatus (20) of a kind of the signal output from the apparatus (20); the effective input signal determining means (120); and the data outputting means (122).

6. A signal processing apparatus according to any one of claims 1 to 4, **characterized by** further comprising a tuner (10A) configured to receive a digital TV broadcast; a digital signal terminal (110) for receiving a digital signal from an apparatus (20: DVHS, a DV, a DVD streamer, etc.) which outputs at least one of a digital signal and an analog signal, and an analog signal terminal (112) for receiving an analog signal from the apparatus (20); a switcher (10B) for selecting one of the digital signal, the analog signal output from the apparatus (20) and a TV broadcast reception signal output from the tuner (10A); and a display apparatus (30) for displaying a signal selected by the switcher (10B), and
**characterized in that** the switcher (10B) comprises: an output signal inquiring means (108) configured to inquire the apparatus (20) of a kind of the signal output from the apparatus (20); the effective input signal determining means (120); and the data outputting means (122).

7. A signal processing method **characterized by** comprising the steps of:
determining which of a plurality of signals (digital/analog) output from an apparatus (20) is an effective input signal (steps ST24 to ST26); and
outputting data corresponding to the effective input signal based on a result of the determining step (step ST28).

8. A signal processing method according to claim 7, **characterized by** further comprising the step of:
inquiring the apparatus (20) of a kind of the signal output from the apparatus (20) which outputs a plurality of kinds of signals (digital/analog) (steps ST20 and ST22), and
**characterized in that** the determining step (steps ST24 to ST26) is configured to determine which of the plurality of signals (digital/analog) output from the apparatus (20) is effective based on a result of inquiry.

9. A signal processing method according to claim 8, **characterized by** further comprising the step of:
setting a specified input in advance and storing input information of the set specified input (step ST10), and
**characterized in that**:
the determining step (steps ST24 to ST26) is configured to determine (step ST24) which of the plurality of signals is effective based on the input information stored in the setting and storing step (step ST10); and
the outputting step (step ST28) is configured to output an input signal corresponding to the input information stored in the setting and storing step (step ST10).

10. A signal processing method according to claim 9, **characterized in that**:
if the effective input signal is a digital signal (a DV signal, etc.), when an apparatus (30) which receives the data output by the outputting step (step ST28) is not adapted for the digital signal (the DV signal, etc.) but adapted for an analog signal (step ST25, NO), the analog signal corresponding to an analog input being set in advance in the setting and storing step (step ST10) is output by the outputting step (step ST28).

11. A signal processing method according to claim 10, **characterized in that** if the effective input signal is a digital signal (MPEG2-TS, etc.) and the apparatus (30) which receives the data output by the outputting step (step ST28) is adapted for the digital signal (MPEG2-TS, etc) (step ST25, YES), data corresponding to the digital signal determined to be effective by the determining step (step ST26) is output by the outputting step (step ST28).

12. A memory (ROM of 10C) storing a method according to any one of claims 7 to 11 as firmware.

13. A digital broadcast receiving apparatus (an STB, a DTV, a DVHS with a digital tuner, etc.) using a method according to any one of claims 7 to 11.
